# EUROPÄISCHE PATENTSCHRIFT

(11) **EP 2 279 594 B1**
(45) Veröffentlichungstag und Bekanntmachung des Hinweises auf die Patenterteilung: **28.12.2011**
(21) Anmeldenummer: 09749769.7
(22) Anmeldetag: 15.05.2009
(51) Int. Cl.: H04L 12/40, G05B 19/042, H04L 12/24

(54) **VERFAHREN ZUM AUSTAUSCH VON PARAMETRIER- UND KONFIGURIERDATEN ZWISCHEN EINEM KONFIGURIER- ODER MANAGEMENTSYSTEM UND EINEM FELDGERÄT**
METHOD FOR EXCHANGING PARAMETERIZATION AND CONFIGURATION DATA BETWEEN A CONFIGURATION OR MANAGEMENT SYSTEM AND A FIELD DEVICE
PROCÉDÉ D ÉCHANGE DE DONNÉES DE PARAMÉTRAGE ET DE CONFIGURATION ENTRE UN SYSTÈME DE CONFIGURATION OU DE GESTION ET UN APPAREIL DE TERRAIN

(30) Priorität: 20.05.2008 DE 102008001886
(43) Veröffentlichungstag der Anmeldung: 02.02.2011
(73) Patentinhaber: Endress+Hauser Flowtec AG, 4153 Reinach (CH)
(72) Erfinder: BIRGEL, Frank, 79650 Schopfheim (DE); DE GROOT, Vincent, 68300 Saint-Louis (FR); STINUS, Jochen, 79594 Inzlingen (DE); VETTER, Immanuel, 76547 Sinzheim (DE)
(74) Vertreter: Andres, Angelika Maria
(86) Internationale Anmeldenummer: PCT/EP2009/055928
(87) Internationale Veröffentlichungsnummer: WO 2009/141279

(56) Entgegenhaltungen:
- WO-A1-2006/069762
- WO-A2-2007/121141

## Beschreibung

Die Erfindung betrifft ein Verfahren zum Austausch von Parametrier- und Konfigurierdaten zwischen einem Konfigurier- oder Managementsystem und einem Feldgerät über einen Feldbus der Automatisierungstechnik.

In der Prozess- ebenso wie in der Fertigungsautomatisierung werden vielfach Feldgeräte eingesetzt, die zur Erfassung und/oder Registrierung und/oder Beeinflussung von Prozessgrößen dienen. Zur Erfassung von Prozessgrößen dienen Messgeräte, wie beispielsweise Füllstandsmessgeräte, Durchflussmess-geräte, Druck- und Temperaturmessgeräte, pH-Messgeräte, Leitfähigkeits-messgeräte, usw., welche die entsprechenden Prozessgrößen Füllstand, Durchfluss, Druck, Temperatur, pH-Wert bzw. Leitfähigkeit erfassen. Zur Registrierung von Prozessgrößen werden Registriergeräte eingesetzt, wie sie beispielsweise von der Endress+Hauser Wetzer hergestellt und vertrieben werden. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firmengruppe Endress + Hauser angeboten und vertrieben. Unter dem in Verbindung mit der Erfindung verwendeten Begriff Feldgeräte sind somit alle Typen von Messgeräten und Aktoren zu subsumieren.

In modernen Industrieanlagen sind Feldgeräte in der Regel über Bussysteme, wie beispielsweise über Profibus® PA, Foundation Fieldbus® oder HART® mit zumindest einer übergeordneten Steuereinheit verbunden. Die übergeordnete Steuereinheit dient zur Prozesssteuerung, zur Prozessvisualisierung, zur Prozessüberwachung sowie zur Inbetriebnahme und Bedienung der Feldgeräte und wird daher oftmals auch als Konfigurier- oder Managementsystem bezeichnet. Oftmals wird die Steuereinheit auch als Bediensystem, als Leitsystem oder als Host bezeichnet. Programme, die auf übergeordneten Steuereinheiten eigenständig ablaufen, sind beispielsweise das Bedientool FieldCare der Firmengruppe Endress+Hauser, das Bedientool Pactware, das Bedientool AMS von Fisher-Rosemount oder das Bedientool PDM von Siemens. Bedientools, die in Leitsystem-Anwendungen integriert sind, sind das PCS7 von Siemens, das Symphony von ABB und das Delta V von Emerson. Unter dem Begriff 'Bedienen von Feldgeräten' wird insbesondere das Konfigurieren und Parametrieren von Feldgeräten, aber auch die Diagnose zwecks frühzeitiger Erkennung von Fehlern an einem der Feldgeräte oder im Prozess verstanden.

Die internationale Offenlegungsschrift WO 2006/069762 veröffentlicht ein Verfahren zur Konfiguration von Feldgeräten in einem Automatisierunssystem, bei dem die Feldgeräte mit anderen Automatisierunskomponenten über einen Feldbus miteinander verbunden sind.

Muss beispielsweise ein defektes Feldgerät, z.B. ein Füllstandsmessgerät oder eine Feldgeräte-Elektronik durch ein neues Feldgerät oder durch eine neue Feldgeräte-Elektronik ersetzt werden, so werden die kompletten Daten, welche Parameter, Tabellen, usw. von dem Konfigurier- oder Managementsystem an das neu installierte Feldgerät übertragen. Diese Übertragung wird als Download bezeichnet. Üblicherweise werden also bei einem Download die gesamten Gerätedaten ins Feldgerät geschrieben. Bei komplexen Feldgeräten, die durch eine Vielzahl von einzelnen Parametern gekennzeichnet sind, kann dieser Prozess mehrere Minuten in Anspruch nehmen, was in vielen Fällen von den Kunden als sehr hinderlich eingestuft wird. Gleiches gilt auch bei einem Upload der Daten.

Der Erfindung liegt die Aufgabe zugrunde, ein Verfahren vorzuschlagen, mit dem die Up-/Download- Zeiten beim Bedienen eines Feldgeräts mittels eines Konfigurier - oder Managementsystems reduziert werden.

Die Aufgabe wird durch ein Verfahren gelöst, das die folgenden Verfahrensschritte aufweist:
- in dem Feldgerät wird zumindest eine erste Funktionsgruppe von Parametrier- und Konfigurierdaten implementiert; diese Implementierung erfolgt üblicherweise vom Hersteller des Feldgeräts;
- über ein mathematisches Verfahren wird eine erste Kennzahl ermittelt, die die erste Funktionsgruppe von Parametrier- oder Konfigurierdaten beschreibt,
- in das Konfigurier- oder Managementsystem wird zumindest eine zweite Funktionsgruppe von Parametrier- und Konfigurierdaten in Form einer Gerätebeschreibung integriert;
- es wird zumindest eine zweite Kennzahl über das mathematische Verfahren ermittelt, die die zweite Funktionsgruppe von Parametrier- oder Konfigurierdaten beschreibt;
- die erste Kennzahl und die zweite Kennzahl werden miteinander verglichen und im Falle einer Abweichung der ersten Kennzahl und der zweiten Kennzahl werden die Parametrier- und Konfigurierdaten der zweiten Funktionsgruppe vom Konfigurier- oder Managementsystem zum Feldgerät übermittelt und anstelle der ersten Funktionsgruppe von Parametrier- oder Konfigurierdaten im Feldgerät gespeichert;
- die Parametrier- und Konfigurierdaten der ersten Funktionsgruppe werden vom Konfigurier- oder Managementsystem ausgelesen und anstelle der zweiten Funktionsgruppe von Parametrier- oder Konfigurierdaten im Konfigurier- oder Managementsystem gespeichert.

Erfindungsgemäß werden nicht die kompletten Daten, wie Parameter, Tabellen, usw. übertragen, sondern es wird eine Kennzahl zur Bestimmung des Gerätezustandes vom Feldgerät ermittelt und an das Konfigurier- oder Managementsystem übertragen. Beispielsweise kann eine Checksumme (CRC, z.B. CRC16, CRC32, o.ä.) über die Daten erstellt werden. Das Konfigurier- oder Managementsystem ermittelt ebenfalls die Kennzahl und vergleicht die Kennzahlen, beispielsweise die Checksummen miteinander. Stimmen die Kennzahlen überein, so wird gefolgert, dass die Konfiguration des Feldgeräts und die im Konfigurier- oder Managementsystem abgespeicherte Konfiguration identisch sind und nicht geändert wurden. Wie nachfolgend im Zusammenhang mit den vorteilhaften Ausgestaltungen des erfindungsgemäßen Verfahrens vorgesehen ist, kann das Vorgehen auf alle Daten bzw. Parameter eines Feldgeräts oder auf zumindest eine Untergruppe von Daten bzw. Parametern übertragen werden. Hierzu muss der Umfang des Datenpakets sowohl auf der Seite des Konfigurier- oder Managementsystems, sprich des Hosts, bekannt sein, als auch auf der Seite des Feldgeräts. Üblicherweise sind die Daten im Konfigurier- oder Managementsystems in Form von Gerätebeschreibungen bzw. von Device Descriptions hinterlegt. Im Feldgerät sind sie in der vom Hersteller gelieferten Gerätefirmware abgespeichert.

Nachfolgend werden Gerätebeschreibungen und ihr Einsatz in der Automatisierungstechnik kurz umrissen. Die Integration von Feldgeräten in Konfigurier- oder Managementsysteme erfolgt über Gerätebeschreibungen, die dafür sorgen, dass die übergeordnete Steuereinheit bzw. das Konfigurier- oder Managementsystem die von den Feldgeräten gelieferten Daten erkennen und interpretieren kann. Bereit gestellt werden die Gerätebeschreibungen für jeden Feldgerätetyp bzw. für jeden Feldgerätetyp in unterschiedlichen Anwendungen von dem jeweiligen Gerätehersteller. Damit die Feldgeräte in unterschiedliche Feldbussysteme integriert werden können, müssen unterschiedliche Gerätebeschreibungen für die unterschiedlichen Feldbussysteme erstellt werden. So gibt es - um nur einige Beispiele zu nennen - HART-, Fieldbus Foundation- und Profibus-Gerätebeschreibungen. Zwecks Schaffung einer einheitlichen Beschreibung für die Feldgeräte, haben die Fieldbus Foundation (FF), die HART Communication Foundation (HCF) und die Profibus Nutzerorganisation (PNO) eine einheitliche elektronische Gerätebeschreibung (Electronic Device Description EDD) erstellt. Die EDD ist in der Norm IEC 61804-2 definiert.

Für eine vollumfängliche Bedienung der Feldgeräte sind darüber hinaus spezielle Gerätebeschreibungen, so genannte DTMs - Device Type Manager oder Gerätemanager - erhältlich. Diese DTMs entsprechen den FDT - Field Device Tool - Spezifikationen. Die als Industriestandard geltende FDT-Spezifikation entspricht einer Schnittstellenspezifikation und wurde von der PNO - Profibus Nutzer Organisation - in Zusammenarbeit mit dem ZVEI - Zentralverband Elektrotechnik- und Elektroindustrie - entwickelt. Die jeweils aktuelle FDT-Spezifikation ist über den ZVEI bzw. die PNO bzw. die FDT-Group erhältlich.

Wie bereits gesagt, ist es im Zusammenhang mit dem erfindungsgemäßen Verfahren vorteilhaft, die Parametrier- und Konfigurierdaten in mehrere Funktionsgruppen zu unterteilen, wobei jede Funktionsgruppe jeweils eine kunden- und/oder anwendungsspezifischen Unter-Funktionsgruppe von Parametrier- oder Konfigurierdaten enthält, wobei zu jeder Unter-Funktionsgruppe eine entsprechende Kennzahl ermittelt wird und mit der entsprechenden Kennzahl, die aus der entsprechenden Unter-Funktionsgruppe der im Feldgerät implementierten Parametrier- und Konfigurierdaten ermittelt wird, verglichen wird. Es werden jeweils nur die Parametrier- und Konfigurierdaten derjenigen Unter-Funktionsgruppe(n) ins Feldgerät übertragen und dort gespeichert oder vom Konfigurier- oder Management ausgelesen und im Konfigurier- oder Managementsystem gespeichert, deren Kennzahl(en) im Konfigurier- oder Managementsystem und im Feldgerät voneinander abweichen.

Weiterhin sieht eine vorteilhafte Ausgestaltung des erfindungsgemäßen Verfahrens vor, dass die die Parametrier- und Konfigurierdaten der zweiten Funktionsgruppe in Form der Gerätebeschreibungen im Offline-Betrieb in das Konfigurier- oder Managementsystem integriert werden, wenn das Feldgerät also nicht über den Feldbus mit dem Konfigurier- oder Managementsystem verbunden ist. In diesem Fall muss das Konfigurier- und Managementsystem die Kennzahl / die Kennzahlen nicht selbst berechnen, sondern kann die Kennzahl / die Kennzahlen aus dem Feldgerät auslesen. Besteht später Bedarf, einen Geräteabgleich durchzuführen, muss / müssen erneut die Kennzahl / die Kennzahlen vom Konfigurier- oder Managementsystem ausgelesen und verglichen werden. Dieser Anwendungsfall liefert großen Kundennutzen, da der Abgleich sehr schnell erfolgen kann, da die Anzahl der schreibungen und/oder lesenden Zugriffe stark reduziert wird. Insbesondere wird hier der Datenabgleich zwischen dem Feldgerät und dem Konfigurier- und Managementsystem auch dann möglich, wenn beide nicht dauerhaft miteinander kommunizieren. Die Offline-Vorbereitung kommt beispielsweise zum Einsatz bei einer Abfüllanlage, wenn von einem Medium auf ein anderes gewechselt wird oder wenn sich die Abfüllmenge ändert.

Darüber hinaus schlägt eine Ausgestaltung des erfindungsgemäßen Verfahrens vor, dass die das Feldgerät beschreibenden korrespondierenden Parameter im Feldgerät und im Konfigurier- oder Managementsystem in zwei Unter-Funktionsgruppen von Parametrier- oder Konfigurierdaten unterteilt werden, wobei in der ersten Unter-Funktionsgruppe die Parametrier- und Konfigurierdaten aufgelistet werden, die mit hoher Wahrscheinlichkeit bei unterschiedlichen Kunden oder in unterschiedlichen Anwendungen an das Feldgerät übermittelt werden können, und wobei in der zweiten Unter-Funktions-gruppe die Parametrier- und Konfigurierdaten aufgelistet werden, die mit hoher Wahrscheinlichkeit entsprechend den jeweiligen Kunden- und/oder Anwendungsanforderungen geändert werden müssen. Daher ist sichergestellt, dass mit hoher Wahrscheinlichkeit nur die Parametrier- und Konfigurierdaten der zweiten Unter-Funktionsgruppe - im Falle einer Abweichung der entsprechenden Kennzahlen - an das Feldgerät übermittelt werden müssen. Gleiches gilt für den Fall, dass die Daten vom Feldgerät ausgelesen werden müssen. Hierdurch lassen sich die Up-/Downlaod-Zeiten stark verringern.

Eine weitere Reduzierung lässt sich im Zusammenhang mit dem erfindungsgemäßen verfahren dadurch erreichen, dass die korrespondierenden Parametrier- und Konfigurierdaten im Feldgerät und im Konfigurier- oder Managementsystem in mehrere Unter-Funktionsgruppen und die Unter-Funktionsgruppen in mehrere Teil-Funktionsgruppen aufgeteilt werden, so dass sichergestellt ist, dass nach einem Vergleich der entsprechenden Kennzahlen nur einige wenige Parametrier- und Konfigurierdaten von Teil-Funktionsgruppen der Unter-Funktionsgruppen von dem Konfigurier- oder Managementsystem in das Feldgerät oder in die entgegengesetzte Richtung übertragen werden müssen.

Als besonders vorteilhaft wird es in Verbindung mit dem erfindungsgemäßen Verfahren erachtet, wenn die Parameter der Unter- und/oder Teil-Funktionsgruppen von Parametrier- und Konfigurierdaten so gewählt werden, dass sie jeweils unterschiedlichen Funktionen oder Funktionsblöcken des Feldgeräts zugeordnet werden. Zu den Funktionsblöcken zählen beispielsweise Stromein- und ausgänge.

Um alle Eventualitäten abdecken zu können, ist weiterhin vorgesehen, dass sich die Parametrier- und Konfigurierdaten der Funktionsgruppen, Unter-Funktionsgruppen oder Teil-Funktionsgruppen zumindest teilweise überschneiden. Somit kann ein zeitoptimierter Zugriffsmechanismus im Konfigurier- oder Managementsystem implementiert werden, was sich z.B. sehr positiv bei der Erstinbetriebnahme des Feldgeräts positiv auswirkt.

Insbesondere ist vorgesehen, dass die Kennzahlen, die mittels der Parametrier- und Konfigurierdaten der Funktionsgruppen, Unter-Funktionsgruppen oder Teil-Funktionsgruppen gebildet werden, in zumindest einem bzw. in einigen wenigen Feldbustelegrammen zusammengefasst und übertragen werden. Hierdurch wird eine sehr schnell Übertragung der Daten zwischen Feldgerät und Konfigurier- oder Managementsystem erreicht.

Um die Kennzahlen auch für einen zukünftigen Austausch von Daten in kompakter Form zur Verfügung zu haben, werden die Kennzahlen, die mittels der Parametrier- und Konfigurierdaten der Funktionsgruppen, Unter-Funktionsgruppen oder Teil-Funktionsgruppen gebildet werden, in zumindest einem Datensatz vom Konfigurier- und Managementsystem dauerhaft gespeichert, so dass sie für spätere Anwendungen verfügbar sind.

Wie bereits erwähnt, kommt das erfindungsgemäße Verfahren beispielsweise beim Austausch eines Feldgeräts oder beim Austausch einer Elektronik eines Feldgeräts zum Einsatz. Weiterhin werden die einzelnen Verfahrensschritte im Falle einer Inbetriebnahme oder der Wartung eines Feldgeräts oder einer Anlage mit einer Vielzahl von Feldgeräten in der Automatisierungstechnik durchgeführt.

Weiterhin ist vorgesehen, dass zwecks Verifikation einer erfolgten Konfigurierung oder Parametrierung des Feldgeräts oder einer korrekten Übertragung der Parametrier- und Konfigurierdaten die Kennzahl/en aus dem Feldgerät ausgelesen oder ins Feldgerät übertragen wird / werden und mit der / den korrespondierenden Kennzahl/en in dem Konfigurier- oder Managementsystem oder im Feldgerät verglichen wird/werden.

Der Einsatz des erfindungsgemäßen Verfahrens sowie seiner vorteilhaften Ausgestaltungen ist prinzipiell bei allen Feldbusprotokollen, z.B. HART, Modbus, FF, PA, Industrial Ethernet, EtherCat, Ethernet IP, ProfiNet, HSE, Modbus TCP möglich.

Weiterhin ist es möglich, die Kennzahlen in einem Datensatz abzulegen, was die Gewährleistung der Persistenz über das Konfigurier- oder Managementsystem sicherstellt. Hiermit kann über einen längeren Zeitraum ein Datenabgleich durchgeführt werden. Der Datensatz kann für den Export und den Import des Datensatzes für ein Bedientool genutzt werden. Weiterhin kann die Kennzahl auch zur Verifikation einer Geräteparametrierung ausgelesen werden, was einer Überprüfung der durchgeführten Parametrierung durch einen Download entspricht. Insbesondere bei sicherheitskritischen Anwendungen kann so eine zusätzliche Sicherheitsstufe eingebaut werden.

Wird im Konfigurier- oder Managementsystem ein Datensatz offline erstellt, so werden die Kennzahlen für die Funktionsgruppen im Konfigurier- oder Managementsystem ermittelt. Vor dem Download in das Feldgerät wird ein Abgleich mit den Kennzahlen des Feldgeräts durchgeführt. Anschließend werden nur die zu ändernden Daten an das Feldgerät kommuniziert.

Die Erfindung wird anhand der nachfolgenden Figuren näher erläutert. Es zeigt:
Fig. 1: eine schematische Darstellung eines Kommunikationsnetzwerks in der Automatisierungstechnik,
Fig. 2: ein Flussdiagramm zur Verdeutlichung des erfindungsgemäßen Verfahrens,
Fig. 3: eine schematische Darstellung der Parametrier- und Konfigurierdaten und ihre Aufteilung in Funktionsgruppen und Unter-Funktionsgruppen und
Fig. 4: eine schematische Darstellung eines Feldbustelegramms.

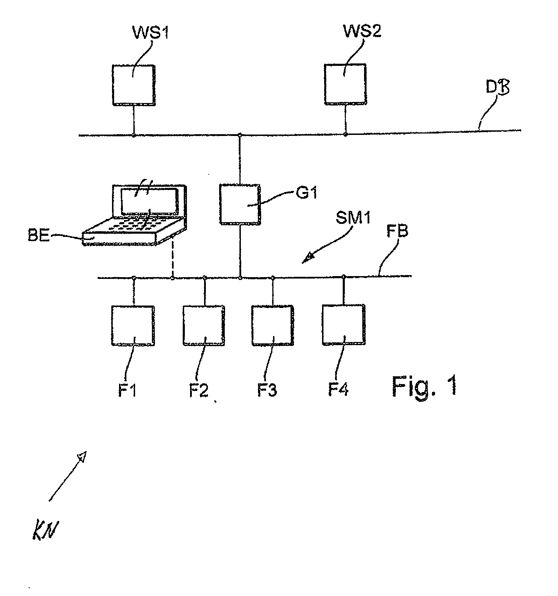

In Fig. 1 ist schematisch ein Kommunikationsnetzwerk KN, wie es in der Prozessautomatisierung verwendet wird, dargestellt. An einen Datenbus DB sind mehrere Rechnereinheiten, Workstations oder Hast-Rechner, WS1, WS2 angeschlossen. Diese Rechnereinheiten WS1, WS2 dienen als übergeordnete Einheiten (Leitsystem, Steuereinheit) oder als Bedieneinheit BE zur Prozessvisualisierung, Prozessüberwachung und zum Engineering, aber auch zum Bedienen und Überwachen von Feldgeräten F1, F2, ....

Der Datenbus DB arbeitet z. B. nach dem Profibus® DP-Standard, dem HSE High Speed Ethernet- Standard der Foundation Feldbus®, dem HART-Standard oder einem der bekannten in der Automatisierungstechnik verwendbaren Standards. Über ein Gateway G1, das auch ais Linking Device oder als Segmentkoppler bezeichnet wird, ist der Datenbus DB mit einem Feldbussegment SM1 verbunden. Das Feldbussegment SM1 besteht aus mehreren Feldgeräten F1, F2, .... die über einen Feldbus FB miteinander verbunden sind. Bei den Feldgeräten F1, F2, ... handelt es sich um Sensoren und/oder um Aktoren. Mit dem Feldbus FB kann auch z.B. temporärangedeutet durch die gestrichelte Linie - eine tragbare Rechner- bzw. Bedieneinheit BE, z.B. ein Laptop, verbunden werden. Über die Bedieneinheit BE hat das Bedienpersonal auf einzelne Feldgeräte F1, F2, .... Zugriff.

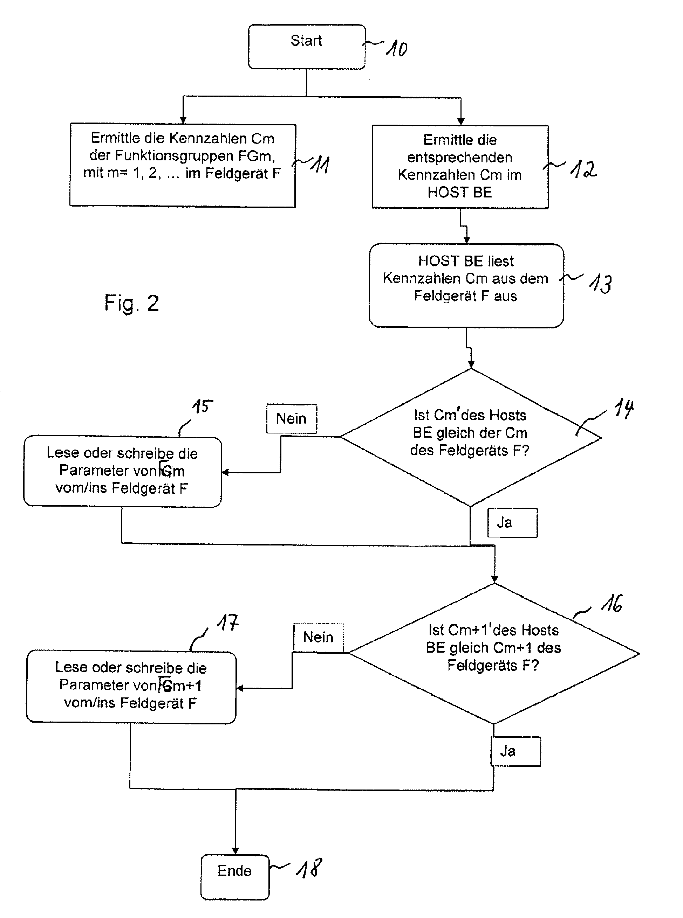

In Fig. 2 ist ein Flussdiagramm dargestellt, das das erfindungsgemäße Verfahren in einer Ausgestaltung verdeutlicht. Das Programm zum Datenaustausch zwischen einem Feldgerät F1 und einem Host, sprich einem Konfigurier- oder Managementsystem BE, wird unter dem Programmpunkt 10 gestartet. Bei dem Programmpunkt 11 werden anhand der Datensätze D1, ... Dm der einzelnen Funktionsgruppen FG1, ... FGm des Feldgeräts F1 die entsprechenden Kennzahlen C1, ... Cm ermittelt. Bei Programmpunkt 12 werden die entsprechenden Kennzahlen C1', ...Cm' im Host BE ermittelt. Anschließend liest der Host BE die Kennzahlen C1,...Cm des Feldgeräts F aus und vergleicht die miteinander korrespondierenden Kennzahlen C1, ...Cm; C1', ... Cm' von Feldgerät F1 und Host BE (Programmpunkt 14). Stimmt die Kennzahl Cm des Feldgeräts F mit der Kennzahl Cm' überein, die anhand der im Feldgerät F bzw. im Host BE hinterlegten Datensätze DSm, DSm' ermittelt wird, so wird anhand des Datensatz DSm+1, DSm+1' der nächsten Funktionsgruppe FGm+1, FGm+1' die Übereinstimmung der Parametrier- und Konfigurierdaten im Feldgerät F und im Host BE überprüft (Programmpunkte 16). Immer dann, wenn die miteinander verglichenen Kennzahlen Cm, Cm'; Cm+1, Cm+1', ... im Feldgerät F und im Host BE voneinander abweichen, wird der die entsprechenden Parametrier- und Konfigurierdaten enthaltene Datensatz DSm; DSm' vom Konfigurier- oder Managementsystem BE aus dem Feldgerät F ausgelesen oder in das Feldgerät F geschrieben (Programmpunkte 15, 17). Das Programm wird nach einer erfolgten Überprüfung der relevanten Kennzahlen unter dem Programmpunkt 18 beendet.

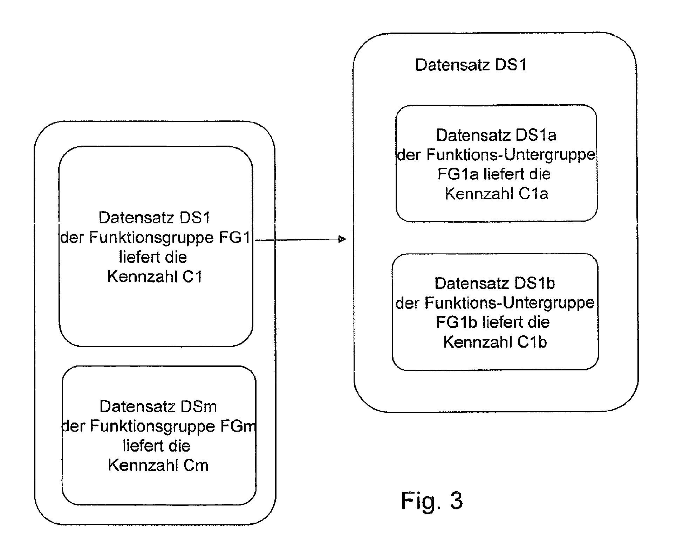

In Fig. 3 ist beispielhaft die Aufteilung der Datensätze DS1, ... DSm eines Feldgeräts F beschrieben. Die Datensätze DS1, ...DSm sind einzelnen Funktionsgruppen FG1, ...FGm zugeordnet. Von jedem Datensatz DS1, ... DSm; DS1', ...DSm' der Funktionsgruppen FG1, .. FGm wird eine Kennzahl C1, ...Cm ermittelt. Nur diese Kennzahlen C1, ... Cm werden über den Feldbus FB von dem Feldgerät zum Konfigurier- oder Managementsystem BE übertragen.

Im rechten Bereich der Fig. 3 ist der Fall dargestellt, dass die Funktionsgruppe FG1, die den Datensatz DS1 enthält, noch einmal in zwei Funktions-Untergruppe FG1a, FG1b mit Datensätzen DS1a, DS1b aufgeteilt ist. Wie bereits an vorhergehender Stelle beschrieben, ist es durchaus möglich, dass identische Parametrier- und Konfigurierdaten teilweise überlappend in mehreren Funktionsgruppen FGm, Funktions-Untergruppen FG1 a, FG1b oder Teil-Funktionsgruppen von Unter-Funktionsgruppen FG1 a, FG1 b enthalten sind. Ziel ist es, die Funktionsgruppen FG, Funktions-Untergruppen FG1a, FG1 b oder Teil-Funktionsgruppen von Unter-Funktionsgruppen FG1 a, FG1 b so aufzuteilen, dass die Parametrier- oder Konfigurierdaten, die mit hoher Wahrscheinlichkeit bei unterschiedlichen Kunden oder in unterschiedlichen Anwendungen unverändert von einem Feldgerät F übernommen werden können, aussortiert werden. Hierdurch wird erreicht, dass nur noch eine relativ geringe Anzahl von Kennzahlen Cm, Cma der Datensätze DS in den entsprechenden Funktionsgruppen FG, Funktions-Untergruppen FG1a, FG1 b oder Teil-Funktionsgruppen von Unter-Funktionsgruppen FG1a, FG1b übertragen werden muss. Hierbei handelt es sich dann mit hoher Wahrscheinlichkeit um die Parametrier- oder Konfigurierdaten, die entsprechend ausgewählten Kunden- und/oder Anwendungsanforderungen geändert werden müssen.

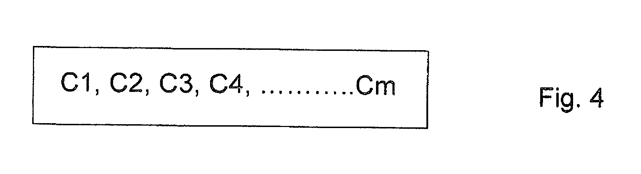

Bevorzugt werden die Kennzahlen C1, ...Cm; C1 a, C1 b, die mittels der Parametrier- oder Konfigurierdaten der Funktionsgruppen FG1, FG2, der Unter-Funktionsgruppen FG1a, FG1 b oder Teil-Funktionsgruppen gebildet werden, in zumindest einem bzw. in einigen wenigen Feldbustelegrammen FBT zusammengefasst und übertragen. Ein entsprechendes Feldbustelegramm ist in Fig. 4 schematisch dargestellt.

## Patentansprüche

1. Verfahren zum Austausch von Parametrier- und Konfigurierdaten (DS) zwischen einem Konfigurier- oder Managementsystem (BE) und einem Feidgerät (F1) über einen Feidbus (FB) der Automatisierungstechnik, **dadurch gekennzeichnet, dass** in dem Feldgerät (F1) zumindest eine erste Funktionsgruppe (FG1) von Parametrier- und Konfigurierdaten (DS1) implementiert wird, wobei über ein mathematisches Verfahren eine erste Kennzahl (C1) ermittelt wird, die die erste Funktionsgruppe (FG1) von Parametrier- oder Konfigurierdaten (DS1) beschreibt, wobei in das Konfigurier- oder Managementsystem (BE) zumindest eine zweite Funktionsgruppe (FG1') von Parametrier- oder Konfigurierdaten (DS1') in Form einer Gerätebeschreibung integriert wird, wobei zumindest eine zweite Kennzahl (C1') über das mathematische Verfahren ermittelt wird, die die zweite Funktionsgruppe (FG1') von Parametrier- oder Konfigurierdaten (DS1') beschreibt, wobei die erste Kennzahl (C1) und die zweite Kennzahl (C1') miteinander verglichen werden und wobei im Falle einer Abweichung der ersten Kennzahl (C1) und der zweiten Kennzahl (C1') die Parametrier- oder Konfigurierdaten (DS1') der zweiten Funktionsgruppe (FG1') vom Konfigurier- oder Managementsystem (BE) zum Feldgerät (F1) übermittelt und anstelle der Parametrier- oder Konfigurierdaten (DS1) der ersten Funktionsgruppe (FG1) im Feldgerät (F1) gespeichert werden, oder wobei die Parametrier- und Konfigurierdaten (DS1) der ersten Funktionsgruppe (FG1) vom Konfigurier- oder Managementsystem (BE) ausgelesen und anstelle der zweiten Funktionsgruppe (FG1') im Konfigurier- oder Managementsystem (BE) gespeichert werden.

2. Verfahren nach Anspruch 1,
wobei die Parametrier- und Konfigurierdaten (DS) in mehrere Funktionsgruppen (FGm mit m = 1, 2, ..) unterteilt werden, wobei jede Funktionsgruppe (FGm mit m = 1, 2, ..) jeweils eine kunden- und/oder anwendungsspezifischen Unter-Funktionsgruppe (FGma, FGmb) von Parametrier- oder Konfigurierdaten (DSma, DSmb) enthält, wobei zu jeder Unter-Funktionsgruppe (DSma, DSmb) eine entsprechende Kennzahl (Cma, Cmb) ermittelt wird und mit der entsprechenden Kennzahl (Cma', Cmb'), die aus der entsprechenden Unter-Funktionsgruppe (FGma', FGmb') der im Feldgerät (F1) implementierten Parametrier- und Konfigurierdaten (DSma, DSmb) ermittelt wird, verglichen wird, und wobei nur die Parametrier- und Konfigurierdaten (DS) derjenigen Unter-Funktionsgruppe(n) (FGma'; FGmb') ins Feldgerät (F1) übertragen und dort gespeichert werden oder vom Konfigurier- oder Management (BE) ausgelesen und im Konfigurier- oder Managementsystem (BE) gespeichert werden, deren Kennzahl(en) (Cma, Cma'; Cmb, Cmb') im Konfigurier- oder Managementsystem (BE) und im Feldgerät (F1) voneinander abweichen.

3. Verfahren nach Anspruch 1,
wobei die Parametrier- und Konfigurierdaten (DS') der zweiten Funktionsgruppe (FG1') in Form der Gerätebeschreibungen im Offline-Betrieb in das Konfigurier- oder Managementsystem (BE) integriert werden.

4. Verfahren nach Anspruch 1 oder 2,
wobei die das Feldgerät (F1) beschreibenden korrespondierenden Parametrier- und Konfigurierdaten (DS; DS') im Feldgerät (F1) und im Konfigurier- oder Managementsystem (BE) in zwei Unter-Funktionsgruppen (FG1a, FG1a'; FG1 b, FG1b') von Parametrier- oder Konfigurierdaten (DS1a, DS1 b; DS1a', DS1b') unterteilt werden, wobei in der ersten Unter-Funktionsgruppe (FG1a, FG1a') die Parametrier- und Konfigurierdaten (DS1a; DS1a') aufgelistet werden, die mit hoher Wahrscheinlichkeit bei unterschiedlichen Kunden und/oder in unterschiedlichen Anwendungen unverändert von dem Feldgerät (F1) übernommen werden können, und wobei in der zweiten Unter-Funktionsgruppe (FG1 b; FG1 b') die Parametrier- und Konfigurierdaten (DS1b, DS1 b') aufgelistet werden, die mit hoher Wahrscheinlichkeit entsprechend den jeweiligen Kunden- und/oder Anwendungsanforderungen geändert werden müssen, so dass mit hoher Wahrscheinlichkeit nur die Parametrier- und Konfigurierdaten (DS1 b, DS1 b') der zweiten Unter-Funktionsgruppe (FG1 b, FG1b') - im Falle einer Abweichung der entsprechenden Kennzahlen (Cmb; Cmb') - an das Feldgerät (F1) oder in die entgegengesetzte Richtung übertragen werden müssen.

5. Verfahren nach einem oder mehreren der vorhergehenden Ansprüche,
wobei die korrespondierenden Parametrier- oder Konfigurationsdaten (DSma, DSmb; DSma', DSmb') im Feldgerät (F1) und im Konfigurier- oder Managementsystem (BE) in mehrere Unter-Funktionsgruppen (FGma, FGmb; FGma', FGmb') und die Unter-Funktionsgruppen (FGma, FGmb; FGma', FGmb') in mehrere Teil-Funktionsgruppen aufgeteilt werden, so dass sichergestellt ist, dass nach einem Vergleich der entsprechenden Kennzahlen (Cma, Cma'; Cmb, Cmb') nur einige wenige Parametrier- oder Konfigurationsdaten von Teil-Funktionsgruppen der Unter-Funktionsgruppen (FGma, FGma'; FGmb, FGmb') von dem Konfigurier- oder Managementsystem (BE) in das Feldgerät (F1) oder in die entgegengesetzte Richtung übertragen werden müssen.

6. Verfahren nach Anspruch 5,
wobei die Parametrier- oder Konfigurationsdaten (DSma, DSma'; DSmb, DSmb') der Unter- und/oder Teil-Funktionsgruppen so gewählt werden, dass sie jeweils unterschiedlichen Funktionen oder Funktionsblöcken des Feldgeräts (F1) zugeordnet werden.

7. Verfahren nach Anspruch 1,
wobei sich die Parametrier- oder Konfigurationsdaten (DSm, DSm'; DSma, DSma') der Funktionsgruppen (FGm, FGm'), Unter-Funktionsgruppen (FGma, FGma') oder Teil-Funktionsgruppen zumindest teilweise überschneiden.

8. Verfahren nach Anspruch 1, 5, 6 oder 7,
wobei die Kennzahlen (Cm, Cm'; Cma, Cma',.. ), die mittels der Parametrier- oder Konfigurationsdaten der Funktionsgruppen (FGm, FGm'), der Unter-Funktionsgruppen (FGma, FGma') oder Teil-Funktionsgruppen gebildet werden, in zumindest einem bzw. in einigen wenigen Feldbustelegrammen (FBT) zusammengefasst und übertragen werden.

9. Verfahren nach Anspruch 1, 5, 6 oder 7,
wobei die Kennzahlen (Cm, Cm'; Cma, Cma'), die mittels der Parametrier- oder Konfigurationsdaten (DSm, DSm'; DSma, DSma') der Funktionsgruppen (FGm, FGm'), der Unter-Funktionsgruppen (FGma, FGma') oder Teil-Funktionsgruppen gebildet werden, in zumindest einem Datensatz vom Konfigurations- und Managementsystem (BE) dauerhaft gespeichert werden, so dass sie für spätere Anwendungen verfügbar sind.

10. Verfahren nach einem oder mehreren der vorhergehenden Ansprüche,
wobei die einzelnen Verfahrensschritte im Falle einer Inbetriebnahme oder der Wartung einer Anlage in der Automatisierungstechnik durchgeführt werden.

11. Verfahren nach Anspruch 10,
wobei zwecks Verifikation einer erfolgreichen Konfigurierung oder Parametrierung des Feldgeräts (F1) oder einer korrekten Übertragung der Parametrier- oder Konfigurationsdaten die Kennzahl/en (Cm, Cm'; Cma, Cma') aus dem Feldgerät (F1) ausgelesen oder ins Feldgerät (F1) übertragen wird / werden und mit der / dein korrespondierenden Kennzahl/en (Cm, Cm'; Cma, Cma') in dem Konfigurations- oder Managementsystem (BE) oder im Feldgerät (F1) verglichen wird/werden.

## Claims

1. Method designed to exchange parameterization and configuration data (DS) between a configuration or management system (BE) and a field device (F1) via a fieldbus (FB) used in automation engineering, **characterized in that** at least a first function group (FG1) of parameterization and configuration data (DS1) is implemented in the field device (F1), wherein a first indicator (C1) is determined by mathematical means, said indicator describing the first function group (FG1) of parameterization or configuration data (DS1), wherein at least a second function group (FG1') of parameterization or configuration data (DS1') is integrated in the configuration or management system (BE) in the form of a device description, wherein at least a second indicator (C1') is determined by mathematical means, said indicator describing the second function group (FG1') of parameterization or configuration data (DS1'), wherein the first indicator (C1) and the second indicator (C1') are compared against one another and, if the first indicator (C1) differs from the second indicator (C1'), the parameterization or configuration data (DS1') of the second function group (FG1') are transmitted by the configuration or management system (BE) to the field device (F1) and are saved in the field device (F1) instead of the parameterization or configuration data (DS1) of the first function group (FG1), or wherein the parameterization and configuration data (DS1) of the first function group (FG1) are read out by the configuration or management system (BE) and are saved in the configuration or management system (BE) instead of the second function group (FG1').

2. Method as claimed in Claim 1,
wherein the parameterization and configuration data (DS) are broken down into several function groups (FGm with m = 1, 2, ..), each function group (FGm with m = 1, 2, ..) containing a sub function group (FGma, FGmb) of parameterization or configuration data (DSma, DSmb) - the sub function groups being customer-specific and/or application-specific - wherein a corresponding indicator (Cma, Cmb) is determined for each sub function group (DSma, DSmb) and compared with the corresponding indicator (Cma', Cmb'), which is determined from the corresponding sub function group (FGma', FGmb') of the parameterization and configuration data (DSma, DSmb) implemented in the field device (F1), and wherein the only parameterization and configuration data (DS) of the sub function group(s) (FGma', FGmb') which are transmitted to the field device (F1) and saved in the field device, or read out by the configuration or management system (BE) and saved in the configuration or management system (BE), are the data of the sub function groups whose specific indicators (Cma, Cma' ; Cmb, Cmb') deviate from one another in the configuration or management system (BE) and in the field device (F1).

3. Method as claimed in Claim 1,
wherein the parameterization and configuration data (DS') of the second function group (FG1') are integrated into the configuration or management system (BE) in the offline mode in the form of device descriptions.

4. Method as claimed in Claims 1 or 2,
wherein the corresponding parameterization and configuration data (DS, DS') describing the field device (F1) are broken down in the field device (F1) and in the configuration or management system (BE) into two sub function groups (FG1a, FG1a' ; FG1b, FG1b') of parameterization or configuration data (DS1 a, DS1b, DS1a', DS1b'), wherein the first sub function group (FG1a, FG1a') lists the parameterization and configuration data (DS1a, DS1a') which the field device (F1) can most likely accept as unchanged for different customers and/or different applications, and wherein the second sub function group (FG1b, FG1 b') lists the parameterization and configuration data (DS1b, DS1b') that very likely have to be changed in accordance with the particular customer and/or application requirements, such that in all probability only the parameterization and configuration data (DS1b, DS1b') of the second sub function group (FG1b, FG1b') have been transmitted to the field device - if the indicators deviate from another (Cmb, Cmb') - or have to be transmitted in the opposite direction.

5. Method as claimed in one or more of the previous claims,
wherein the corresponding parameterization or configuration data (DSma, DSmb ; DSma', DSmb') are broken down in the field device (F1) and the configuration and management system (BE) into several sub function groups (FGma, FGmb ; FGma', FGmb') and the sub function groups (FGma, FGmb ; FGma', FGmb') are, in turn, broken down into several partial function groups in such a way that ensures that only a few parameterization or configuration data records of partial function groups of the sub function groups (FGma, FGmb ; FGma', FGmb') have to be transmitted by the configuration or management system (BE) to the field device (F1), or in the opposite direction, when the corresponding indicators (Cma, Cma' ; Cmb, Cmb') have been compared.

6. Method as claimed in Claim 5,
wherein the parameterization or configuration data (DSma, DSma' ; DSmb, DSmb') of the sub function group and/or the partial function groups are selected in such a way that they are assigned to different functions or function blocks of the field device (F1).

7. Method as claimed in Claim 1,
wherein the parameterization or configuration data (DSm, DSm' ; DSma, DSma') of the function groups (FGm, FGm'), the sub function groups (FGma; FGma') or the partial function groups overlap at least to some extent.

8. Method as claimed in Claims 1, 5, 6 or 7,
wherein the indicators (Cm, Cm' ; Cma, Cma' ; ...), which are formed using the parameterization or configuration data of the function groups (FGm, FGm'), the sub function groups (FGma, FGma') or partial function groups are grouped into at least one, or just a few, field bus telegrams (FBT) and transmitted.

9. Method as claimed in Claims 1, 5, 6 or 7,
wherein the indicators (Cm, Cm' ; Cma, Cma'), which are formed using the parameterization or configuration data (DSm, DSm' ; DSma, DSma') of the function groups (FGm, FGm'), the sub function groups (FGma, FGma') or the partial function groups, are permanently stored in at least one data record by the configuration and management system (BE) such that they are available for subsequent applications.

10. Method as claimed in one or more of the previous claims,
wherein the individual process steps are performed in the event of the commissioning or maintenance of an installation in the automation engineering system.

11. Method as claimed in Claim 10,
wherein - for the purpose of verifying the successful configuration or parameterization of the field device (F1), or the correct transmission of the parameterization or configuration data - the indicator(s) (Cm, Cm' ; Cma, Cma') is/are read out from the field device (F1), or transmitted to the field device (F1) and is/are compared to the corresponding indicator(s) (Cm, Cm' ; Cma, Cma') in the configuration or management system (BE) or in the field device (F1).

## Revendications

1. Procédé destiné à l'échange de données de paramétrage et de configuration (DS) entre un système de configuration ou de gestion (BE) et un appareil de terrain (F1) par l'intermédiaire d'un bus de terrain (FB) de la technique d'automatisation, **caractérisé en ce qu'**est implémenté dans l'appareil de terrain (F1) au moins un premier groupe fonctionnel (FG1) de données de paramétrage et de configuration (DS1), un premier indice (C1) étant déterminé par le biais d'une méthode mathématique, lequel indice décrit le premier groupe fonctionnel de données de paramétrage et de configuration (DS1), au moins un deuxième groupe fonctionnel (FG1') de données de paramétrage et de configuration (DS1') étant intégré dans le système de configuration ou de gestion (BE) sous la forme d'une description d'appareil, au moins un deuxième indice (C1') étant déterminé par le biais de la méthode mathématique, lequel indice décrit le deuxième groupe fonctionnel de données de paramétrage et de configuration (DS1'), le premier indice (C1) et le deuxième indice (C1') étant comparés entre eux et, en cas de différence entre le premier indice (C1) et le deuxième indice (C1'), les données de paramétrage et de configuration (DS1') du deuxième groupe fonctionnel (FG1') sont transmises par le système de configuration ou de gestion (BE) à l'appareil de terrain (F1) et enregistrées en lieu et place des données de paramétrage et de configuration (DS1) du premier groupe fonctionnel (FG1) dans l'appareil de terrain (F1), ou les données de paramétrage et de configuration (DS1) du premier groupe fonctionnel (FG1) sont lues par le système de configuration ou de gestion (BE) et enregistrées en lieu et place du deuxième groupe fonctionnel (FG1') dans le système de configuration ou de gestion (BE).

2. Procédé selon la revendication 1,
pour lequel les données de paramétrage et de configuration (DS) sont scindées en plusieurs groupes fonctionnels (FGm avec m = 1, 2, ..), chaque groupe fonctionnel (FGm avec m = 1, 2, ..) contenant un sous-groupe fonctionnel (FGma, FGmb) de données de paramétrage et de configuration spécifique au client et/ou spécifique à l'application, un indice (Cma, Cmb) étant déterminé pour chaque sous-groupe fonctionnel (DSma, DSmb) et comparé avec l'indice correspondant (Cma', Cmb'), lequel est déterminé à partir du sous-groupe fonctionnel (FGma', FGmb') correspondant, relatif aux données de paramétrage et de configuration (DSma, DSmb) implémentées dans l'appareil de terrain (F1), et où seules les données de paramétrage et de configuration (DS) du/des sous-groupe(s) fonctionnel(s) (FGma', FGmb') sont transmises dans l'appareil de terrain (F1) et y sont enregistrées ou sont lues par le système de configuration ou de gestion (BE) et enregistrées dans le système de configuration ou de gestion (BE), dont l'/les indice(s) (Cma, Cma' ; Cmb, Cmb') est/sont différent(s) l'/les un(s) par rapport à/aux (l')autre(s) au sein du système de configuration ou de gestion (BE) et au sein de l'appareil de terrain (F1).

3. Procédé selon la revendication 1,
pour lequel les données de paramétrage et de configuration (DS') du deuxième groupe fonctionnel (FG1') sont intégrées en mode hors ligne dans le système de configuration ou de gestion (BE) sous la forme de descriptions d'appareil.

4. Procédé selon la revendication 1 ou 2,
pour lequel les données de paramétrage et de configuration (DS, DS') décrivant l'appareil de terrain (F1) sont scindées, dans l'appareil de terrain (F1) et dans le système de configuration ou de gestion (BE), en deux sous-groupes fonctionnels (FG1a, FG1a' ; FG1b, FG1b') de données de paramétrage ou de configuration (DS1a, DS1b, DS1a', DS1b'), procédé pour lequel sont répertoriées dans le premier sous-groupe fonctionnel (FG1a, FG1a') les données de paramétrage et de configuration (DS1a, DS1a'), qui peuvent être reprises, avec une grande probabilité auprès de clients différents et/ou dans des applications différentes, de façon inchangée par l'appareil de terrain (F1), et pour lequel sont répertoriées dans le deuxième sous-groupe fonctionnel (FG1b, FG1b') les données de paramétrage et de configuration (DS1b, DS1b'), qui doivent être modifiées avec une grande probabilité selon les exigences des clients et des applications respectifs, de telle manière qu'avec une grande probabilité, seules les données de paramétrage et de configuration (DS1 b, DS1 b') du deuxième sous-groupe fonctionnel (FG1b, FG1b')-dans le cas d'une divergence des indices (Cmb, Cmb') correspondants - doivent être transmises à l'appareil de terrain (F1) ou dans la direction opposée.

5. Procédé selon l'une ou plusieurs des revendications précédentes,
pour lequel les données de paramétrage et de configuration (DSma, DSmb ; DSma', DSmb') correspondantes sont scindées, dans l'appareil de terrain (F1) et dans le système de configuration ou de gestion (BE), en plusieurs sous-groupes fonctionnels (FGma, FGmb ; FGma', FGmb') et les sous-groupes fonctionnels (FGma, FGmb ; FGma', FGmb') en plusieurs groupes fonctionnels partiels, si bien qu'il soit garanti, après une comparaison des indices (Cma, Cma' ; Cmb, Cmb') correspondants, que seul un faible nombre de données de paramétrage ou de configuration de groupes fonctionnels partiels des sous-groupes fonctionnels (FGma, FGmb ; FGma', FGmb') doivent être transmises par le système de configuration ou de gestion (BE) dans l'appareil de terrain (F1) ou dans la direction opposée.

6. Procédé selon la revendication 5,
pour lequel les données de paramétrage et de configuration (DSma, DSma' ; DSmb, DSmb') des sous-groupes fonctionnels et/ou des groupes fonctionnels partiels sont sélectionnées de telle manière qu'elles soient attribuées respectivement à différentes fonctions et différents blocs fonctionnels de l'appareil de terrain (F1).

7. Procédé selon la revendication 1,
pour lequel les données de paramétrage et de configuration (DSm, DSm' ; DSma, DSma') des groupes fonctionnels (FGm, FGm'), des sous-groupes fonctionnels (FGma; FGma') ou des groupes fonctionnels partiels se chevauchent au moins partiellement.

8. Procédé selon la revendication 1, 5, 6 ou 7,
pour lequel les indices (Cm, Cm' ; Cma, Cma' ; ...), qui sont formés au moyen des données de paramétrage ou de configuration des groupes fonctionnels (FGm, FGm'), des sous-groupes fonctionnels (FGma, FGma') ou des groupes fonctionnels partiels, sont regroupés et transmis dans au moins un ou dans un faible nombre de télégrammes de bus de terrain (FBT).

9. Procédé selon la revendication 1, 5, 6 ou 7,
pour lequel les indices (Cm, Cm' ; Cma, Cma'), qui sont formés au moyen des données de paramétrage ou de configuration (DSm, DSm' ; DSma, DSma') des groupes fonctionnels (FGm, FGm'), des sous-groupes fonctionnels (FGma, FGma') ou des groupes fonctionnels partiels, sont enregistrés durablement dans au moins un bloc de données par le système de configuration et de gestion (BE), si bien qu'ils soient disponibles pour des applications ultérieures.

10. Procédé selon l'une ou plusieurs des revendications précédentes,
pour lequel les différentes étapes de procédé sont exécutées dans le cas d'une mise en service ou de la maintenance d'une installation dans la technique d'automatisation.

11. Procédé selon la revendication 10,
pour lequel, à des fins de vérification d'une configuration ou d'un paramétrage réussi de l'appareil de terrain (F1) ou d'une transmission correcte des données de paramétrage ou de configuration, l'/les indice(s) (Cm, Cm' ; Cma, Cma') est/sont lu(s) à partir de l'appareil de terrain (F1) ou transmis dans l'appareil de terrain (F1) et est/sont comparé(s) avec l'/les indice(s) (Cm, Cm' ; Cma, Cma') correspondant(s) dans le système de configuration ou de gestion (BE) ou dans l'appareil de terrain (F1).
